# EUROPEAN PATENT SPECIFICATION

(11) **EP 3 680 152 B1**
(45) Date of publication and mention of the grant of the patent: **21.09.2022**
(21) Application number: 20150269.7
(22) Date of filing: 03.01.2020
(51) Int. Cl.: B62D 25/16

(54) **FAST LOCKING / UNLOCKING DEVICE FOR CONSTRAINING A FENDER TO A FRAME**
SCHNELLKOPPLUNG ZUM KOPPELN EINES KOTFLÜGELS AN EINEN RAHMEN
COUPLAGE RAPIDE POUR COUPLER UN GARDE-BOUE À UN CADRE

(30) Priority: 10.01.2019 IT 201900000370
(43) Date of publication of application: 15.07.2020
(73) Proprietor: DOMAR S.p.A., 75100 Matera (IT)
(72) Inventor: LORUSSO, Antonio, 75100 MATERA (IT)
(74) Representative: Conversano, Gabriele

(56) References cited:
- EP-A1- 1 619 108
- EP-A1- 2 193 981

## Description

The present invention relates to a system for fastening a fender to tubes installed in the frame of a vehicle, and in particular the frame of trucks, TIR and other heavy vehicles, which allows a safe and at the same time rapid fixing for those fender models without a cylindrical housing for fastening to tubes integral to the truck frame. At the state of the art, there are known various embodiments of devices for fixing fenders to truck frames and similar vehicles. Some categories of fenders are provided with a cylindrical housing configured to receive a tube integral to the frame. The axial sliding of the fender to the tube is limited by means of blocking means. These devices are engaged in the tube and fender housing and fasten the two pieces relative axial position. Anyway, some fender models are not provided with a cylindrical housing configured to receive a tube integral to the frame, and so the problem to provide a coupling device which allows a rapid and safe fixing to the frame of a vehicle, also for these devices, remains unsolved.

**An example of devices known to the art is described in** EP1619108**.**

### Aim of the invention

Aim of the present invention is to provide a fastening system of a fender to a frame of a truck, which overcomes the limits linked to the devices known according to the state of the art, and which can be applied to those fenders not provided with suitable housings for fastening to tubes integral to the frame. Moreover, the invention provides a rapid coupling/decoupling system which can be rapidly mounted and able to guarantee the anchorage of the fender to the tube integral to the vehicle frame also in case of strokes.

### Brief description of the invention

The invention reaches the prefixed aims since it is a device (1) for fastening a fender to a hollow tube (30) integral to a frame of a heavy vehicle, comprising:
- a plastic insert (20) configured to be introduced in said hollow tube (30) integral to the frame of a vehicle,
- a first fastening means (10) configured to be fastened both to said insert (20) and the fender (40), and a second fastening means (60) configured to be fastened to the fender (40) and comprising a through hole for said tube (30).

### Description of the rapid coupling/decoupling functioning

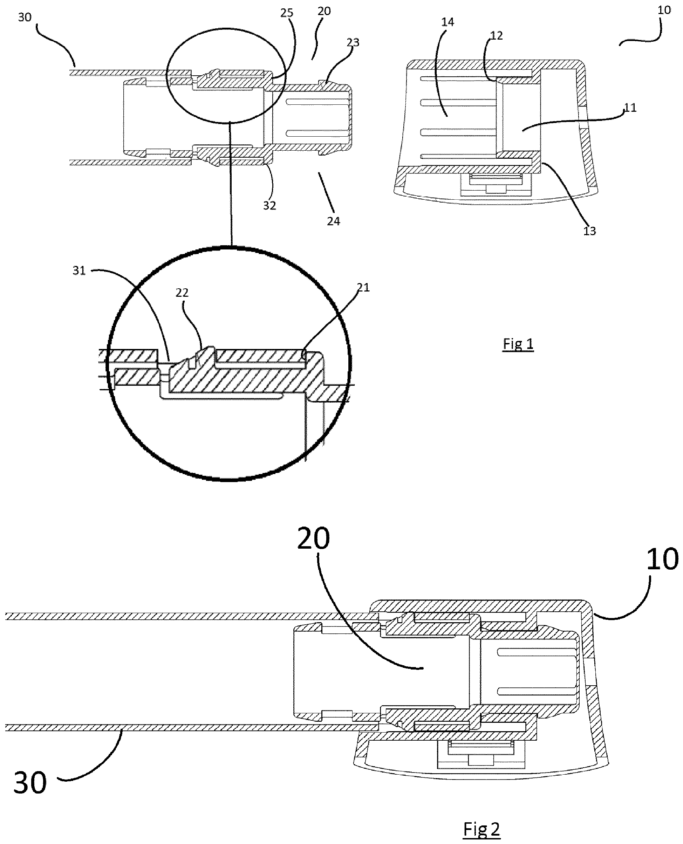

The invention will be described in the following with reference to the appended figures 1 to 10.

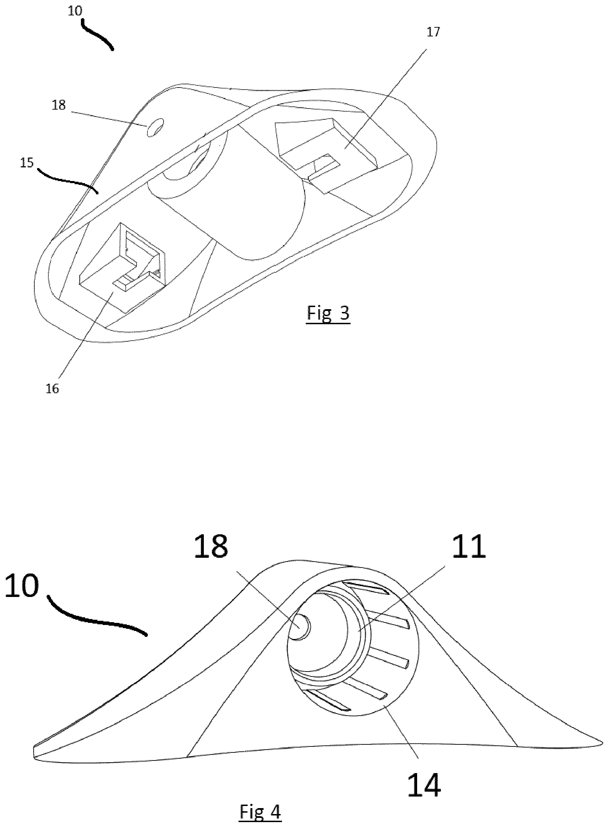

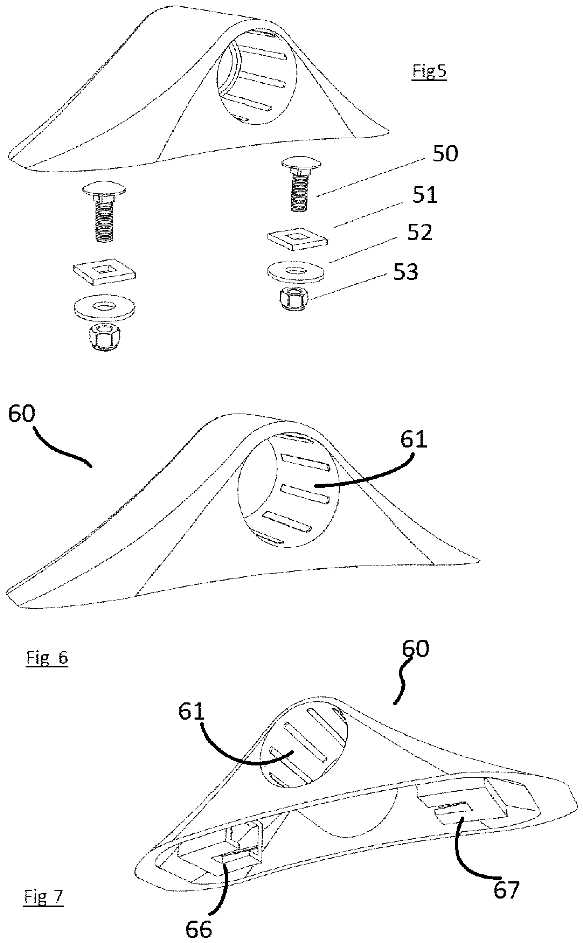

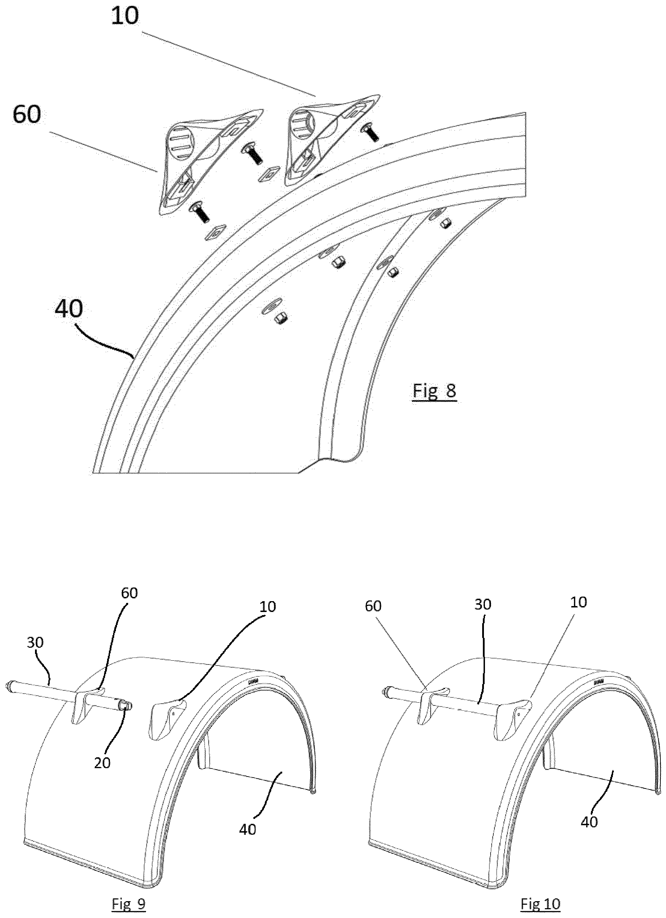

In figure 1 and 2 there are shown two section views of the fastening of the first fastening means (10) to the tube integral to the frame; in figures 3, 4 and 5 there are shown axonometric views of said first fastening means; in figures 6 and 7 there are shown axonometric views of said second fastening means; in figures 8, 9 and 10 it is shown the assembly of the devices to the fender.

The device (1) according to the invention comprises a plastic insert (20) configured to be introduced in a hollow tube (30) integral to the frame of a vehicle, a first fastening means configured to be fastened both to said insert (20) and the fender (40) and a second fastening means configured to be fastened to the fender (40) and comprising a through hole for said tube (30). The substantially cylindrical plastic insert (20) comprises an abutting surface (21) and at least a snap hook (22). The insert is configured so that by introducing it inside a tube (30), the snap hook (22) engages a suitable hole (31) provided in the tube (30), and the abutting surface is stopped against the end portion (32) of the tube (30), thus fastening the axial sliding of the insert (20) to the tube (30). The provision of at least one, and preferably more than one snap hook (22) fastens also the relative rotation between insert (20) and tube (30). The projecting portion (24) of the insert is also provided with an outer abutting surface (25).

In the portion (24) remaining projecting with respect to the tube (30), the insert (20) comprises also at least one, and preferably more than one wedge hook (23) configured to engage an abutting surface (13) provided in a suitable housing (11) of the fastening means (10).

The fastening means (10) comprises in fact a cylindrical housing (11) provided with a first (12) and a second abutting surface (13). The housing and the abutting surfaces are configured so that, when the projecting portion (24) of the insert (20) is introduced in said housing (11), the first abutting surface (12) is stopped against the outer abutting surface (25) of said insert (20), and the second abutting surface (13) is engaged by said at least one wedge hook (23), thus fastening in both directions the relative axial sliding of the fastening means (10) to the insert (20) and so to the tube (30).

Moreover, conveniently, the fastening means (10) comprises also a second housing (14), of greater dimensions, configured to be coupled with the tube (30), when the first cylindrical housing (11) is coupled with the projecting portion (24) of the insert (20) in the just described way.

The fastening means (10) comprises also a body (15) provided with suitable seats (16, 17) for fastening the same to a fender by means of bolts and nuts, as well as a hole (18) in the side wall of said body (15), configured so that the introducing of a tool is allowed for releasing the device by means of pressure on the projecting portion (24) of the insert (20).

In figure 5, it is shown an exploded view of an embodiment of the bolts and nuts which can be used for anchoring the fastening means (10) to a fender, useful in case said seats (16, 17) are provided with a rectangular slot open from one side. In this case, the bolts and nuts comprise for each one of the two seats (16, 17) a screw with round head and square shaft (50), a square washer (51), a round washer (52) and a self-locking nut (53).

As it is shown in figures 6 and 7, the system comprises also a second fastening means (60) configured to act as passage for the tube (30) and to be fastened to the fender (40) similarly to what happens with the first fastening means (10), according to what shown in figures 9 and 10. Also said second fastening means (60) comprises a cylindrical housing (61), in which the tube (30) integral to the frame can be introduced slidingly, and comprises two seats (66, 67) for fastening the same to a fender by means of bolts and nuts, similarly to what happens for said first fastening means (10).

In figures 8 to 10, it is shown the functioning of the device. Fig. 8 is an exploded view of the various elements of the system as well as of the bolts and nuts. The next figures 9 and 10 highlight the axial sliding of the fender (40) to which the two fastening means (10, 60) are previously fastened. At first, as it is shown in figure 9, the tube (30), to which the insert (20) is previously blocked, engages the second fastening means (60), and in the following it engages the first fastening means (10), where it is introduced until the insert (20) engages the relative abutting surfaces by means of its own hooks, as just described.

It is to be specified that the device according to the present invention can be mounted in any position with respect to the development of the fender.

## Claims

1. Device (1) for fastening a fender to a hollow tube (30) integral to a frame of a heavy vehicle, **characterized in that it comprises** :
- a plastic insert (20) configured to be introduced in said hollow tube (30) integral to the frame of a vehicle,
- a first fastening means (10) configured to be fastened both to said insert (20) and the fender (40), and a second fastening means configured to be fastened to the fender (40) and comprising a through hole for said tube (30).

2. Device (1) for fastening a fender according to claim 1, **characterized in that** said insert (20) comprises an abutting surface (21) and at least a snap hook (22), and is configured so that by introducing it inside said tube (30), the snap hook (22) engages a suitable hole (31) provided in said tube (30), and the abutting surface (21) is stopped against the end portion (32) of the tube (30), thus fastening the axial sliding of the insert (20) to the tube (30).

3. Device (1) for fastening a fender according to claim 2, **characterized in that** in the portion (24) of said insert (20) remaining projecting with respect to the tube (30), the insert (20) comprises also at least a wedge hook (23) configured to engage an abutting surface (13) provided in a suitable housing (11) of said first fastening means (10) .

4. Device (1) for fastening a fender according to claim 3, **characterized in that** said first fastening means (10) comprises a cylindrical housing (11) provided with a first (12) and a second abutting surface (13), said housing and said abutting surfaces being configured so that, when said projecting portion (24) of said insert (20) is introduced in said housing (11), said first abutting surface (12) is stopped against the outer abutting surface (25) of said insert (20), and said second abutting surface (13) is engaged by said at least one wedge hook (23), thus fastening in both directions the relative axial sliding of the first fastening means (10) to the insert (20) and so to the tube (30).

5. Device (1) for fastening a fender according to claim 4, **characterized in that** said fastening means (10) comprises also a second housing (14) of greater dimensions with respect to said first housing (11), configured to be coupled with the tube (30), when the first cylindrical housing (11) is coupled with the projecting portion (24) of the insert (20).

6. Device (1) for fastening a fender according to claim 5, **characterized in that** said fastening means (10) comprises also a body (15) provided with suitable seats (16, 17) for fastening the same to a fender by means of bolts and nuts, as well as a hole (18) in the side wall of said body (15), configured so that the introducing of a tool is allowed for releasing the device by means of pressure on the projecting portion (24) of the insert (20).

7. Device (1) for fastening a fender according to claim 6, **characterized in that** said seats (16, 17) are provided with a rectangular slot open from one side, configured to receive a screw with round head and square shaft (50).

8. Device (1) for fastening a fender according to claim 7, further comprising a second fastening means (60) configured to act as passage for the tube (30) and to be fastened to the fender (40), said second fastening means (60) comprising a cylindrical housing (61), in which the tube (30) integral to the frame can be introduced slidingly, and comprising two seats (66, 67) for fastening the same to a fender by means of bolts and nuts.

9. Device (1) for fastening a fender according to any one of the preceding claims, **characterized in that** it can be mounted in any position with respect to the development of the fender.

## Patentansprüche

1. Vorrichtung (1) zum Befestigen eines Kotflügels an einem hohlen Rohr (30), das einstückig mit einem Rahmen eines Lastkraftwagens verbunden ist, **dadurch gekennzeichnet, dass** es
- einen Kunststoffeinsatz (20) aufweist, der dazu konfiguriert ist, in das hohle Rohr (30) einstückig mit dem Rahmen eines Fahrzeugs eingeführt zu werden,
- ein erstes Befestigungsmittel (10) aufweist, das so konfiguriert ist, dass es sowohl an dem Einsatz (20) als auch dem Kotflügel (40) befestigt werden kann, und ein zweites Befestigungsmittel, das so konfiguriert ist, dass es an dem Kotflügel (40) befestigt werden kann und ein Durchgangsloch für das Rohr ( 30) umfasst.

2. Vorrichtung (1) zum Befestigen eines Kotflügels nach Anspruch 1, **dadurch gekennzeichnet, dass** der Einsatz (20) eine Kontaktfläche (21) und mindestens einen Schnapphaken (22) umfasst und so konfiguriert ist, dass er durch Einführen in ein Rohr (30) hineingesteckt werden kann, wobei der Schnapphaken (22) in ein geeignetes Loch (31) eingreift, das in dem Rohr (30) vorgesehen ist, und die Kontaktfläche (21) somit gegen den Endabschnitt (32) des Rohrs (30) gehalten wird, mit Befestigen des axialen Gleitens des Einsatzes (20) an dem Rohr (30).

3. Vorrichtung (1) zum Befestigen eines Kotflügels nach Anspruch 2, **dadurch gekennzeichnet, dass** in dem Abschnitt (24) des Einsatzes (20), der bezüglich des Rohrs (30) vorspringend bleibt, umfasst der Einsatz (20) auch mindestens einen Keilhaken (23), der so konfiguriert ist, dass er mit einer Kontaktfläche (13) in Eingriff kommt, die in einem geeigneten Gehäuse (11) des ersten Befestigungsmittels (10) vorgesehen ist.

4. Vorrichtung (1) zum Befestigen eines Kotflügels nach Anspruch 3, **dadurch gekennzeichnet, dass** das erste Befestigungsmittel (10) ein zylindrisches Gehäuse (11) umfasst, das mit einer ersten (12) und einer zweiten Kontaktfläche (13) versehen ist, wobei das Gehäuse und die Kontaktflächen so konfiguriert sind, dass, wenn der vorstehende Abschnitt (24) des Einsatzes (20) in das Gehäuse (11) eingeführt wird, wird die erste Kontaktfläche (12) gegen die äußere Kontaktfläche (25) des Einsatzes (20) angehalten und wird die zweite Kontaktfläche (13) von dem mindestens einen Keilhaken (23) in Eingriff genommen, wodurch das relative axiale Gleiten des ersten Befestigungsmittels (10) an dem Einsatz (20) in beiden Richtungen und also zum Rohr (30), befestigt wird.

5. Vorrichtung (1) zum Befestigen eines Kotflügels nach Anspruch 4, **dadurch gekennzeichnet, dass** das Befestigungsmittel (10) auch ein zweites Gehäuse (14) mit größeren Abmessungen in Bezug auf das erste Gehäuse (11) umfasst, das konfiguriert ist, um mit dem Rohr (30) gekoppelt zu werden, wenn das erste zylindrische Gehäuse (11) mit dem vorstehenden Abschnitt (24) des Einsatzes (20) gekoppelt ist.

6. Vorrichtung (1) zum Befestigen eines Kotflügels nach Anspruch 5, **dadurch gekennzeichnet, dass** die Befestigungsmittel (10) auch einen Körper (15) umfassen, der mit geeigneten Aufnahmen (16, 17) zum Befestigen desselben an einem Kotflügel mittels Bolzen und Muttern versehen ist, sowie ein Loch (18) in der Seitenwand des Körpers (15), das so konfiguriert ist, dass das Einführen eines Werkzeugs zum Lösen der Vorrichtung durch Druck auf den vorstehenden Abschnitt (24) des Einsatzes (20) ermöglicht wird.

7. Vorrichtung (1) zum Befestigen eines Kotflügels nach Anspruch 6, **dadurch gekennzeichnet, dass** die Aufnahmen (16, 17) mit einem rechteckigen Schlitz versehen sind, der von einer Seite offen ist, der konfiguriert ist, um eine Schraube mit rundem Kopf und quadratischem Schaft (50) aufzunehmen.

8. Vorrichtung (1) zum Befestigen eines Kotflügels nach Anspruch 7, ferner umfassend ein zweites Befestigungsmittel (60), das konfiguriert ist, um als Durchgang für das Rohr (30) zu wirken und an dem Kotflügel (40) befestigt zu werden, wobei das zweite Befestigungsmittel (60) mit einem zylindrischen Gehäuse (61) versehen ist, in das das mit dem Rahmen einstückig verbundenen Rohr (30) gleitend eingeführt werden kann, und mit zwei Aufnahmen (66, 67) zur Befestigung desselben an einem Kotflügel mittels Bolzen und Muttern.

9. Vorrichtung (1) zum Befestigen eines Kotflügels nach einem der vorhergehenden Ansprüche, **dadurch gekennzeichnet, dass** sie in jeder Position bezüglich der Abwicklung des Kotflügels montiert werden kann.

## Revendications

1. Dispositif (1) de fixation d'un garde-boue sur un tube creux (30) solidaire d'un châssis de véhicule poids lourd, **caractérisé en ce qu'**il comporte
- un insert plastique (20) configuré pour être introduit dans ledit tube creux (30) solidaire du châssis d'un véhicule,
- un premier moyen de fixation (10) configuré pour être fixé à la fois audit insert (20) et au garde-boue (40), et un deuxième moyen de fixation configuré pour être fixé au garde-boue (40) et comprenant un trou traversant pour ledit tube ( 30) .

2. Dispositif (1) de fixation d'un garde-boue selon la revendication 1, **caractérisé en ce que** ledit insert (20) comporte une surface de butée (21) et au moins un mousqueton (22), et est configuré pour qu'en l'introduisant à l'intérieur dudit tube (30), le mousqueton (22) engage un trou approprié (31) prévu dans ledit tube (30), et la surface de butée (21) est arrêtée contre la partie d'extrémité (32) du tube (30), ainsi en solidarisant le coulissement axial de l'insert (20) au tube (30).

3. Dispositif (1) de fixation d'un garde-boue selon la revendication 2, **caractérisé en ce que** dans la partie (24) dudit insert (20) restant en saillie par rapport au tube (30), l'insert (20) comprend également au moins un crochet de coin (23) configuré pour s'engager dans une surface de butée (13) prévue dans un logement approprié (11) dudit premier moyen de fixation (10).

4. Dispositif (1) de fixation d'un garde-boue selon la revendication 3, **caractérisé en ce que** lesdits premiers moyens de fixation (10) comprennent un logement cylindrique (11) pourvu d'une première (12) et d'une deuxième surface de butée (13), ledit logement et lesdites surfaces de butée étant configurées de sorte que, lorsque ladite partie en saillie (24) dudit insert (20) est introduite dans ledit logement (11), ladite première surface de butée (12) est arrêtée contre la surface de butée externe (25) dudit insert (20), et ladite deuxième surface de butée (13) est engagée par ledit au moins un crochet de coin (23), fixant ainsi dans les deux sens le coulissement axial relatif des premiers moyens de fixation (10) à l'insert (20) et donc au tube (30).

5. Dispositif (1) de fixation d'un garde-boue selon la revendication 4, **caractérisé en ce que** lesdits moyens de fixation (10) comprennent également un deuxième logement (14) de dimensions supérieures par rapport audit premier logement (11), configuré pour être couplé avec le tube (30), lorsque le premier logement cylindrique (11) est accouplé à la partie saillante (24) de l'insert (20).

6. Dispositif (1) de fixation d'un garde-boue selon la revendication 5, **caractérisé en ce que** lesdits moyens de fixation (10) comprennent également un corps (15) pourvu de sièges appropriés (16, 17) pour fixer celui-ci à un garde-boue au moyen de boulons et écrous, ainsi qu'un trou (18) dans la paroi latérale dudit corps (15), configuré de manière à permettre l'introduction d'un outil pour libérer le dispositif au moyen d'une pression sur la partie saillante (24) de l'insert (20).

7. Dispositif (1) de fixation d'un garde-boue selon la revendication 6, **caractérisé en ce que** lesdits sièges (16, 17) sont pourvus d'une fente rectangulaire ouverte d'un côté, configurée pour recevoir une vis à tête ronde et tige carrée (50) .

8. Dispositif (1) de fixation d'un garde-boue selon la revendication 7, comprenant en outre un deuxième moyen de fixation (60) configuré pour servir de passage pour le tube (30) et pour être fixé au garde-boue (40), ledit deuxième moyen de fixation (60) comprenant un logement cylindrique (61), dans lequel le tube (30) solidaire du châssis peut être introduit de manière coulissante, et comprenant deux sièges (66, 67) pour la fixation de celui-ci à un garde-boue au moyen de boulons et d'écrous.

9. Dispositif (1) de fixation d'un garde-boue selon l'une quelconque des revendications précédentes, **caractérisé en ce qu'**il peut être monté dans n'importe quelle position par rapport au développement du garde-boue.
